# EUROPEAN PATENT SPECIFICATION

(11) **EP 3 686 461 B1**
(45) Date of publication and mention of the grant of the patent: **04.08.2021**
(21) Application number: 20152226.5
(22) Date of filing: 16.01.2020
(51) Int. Cl.: F16H 25/18, F16F 1/04, F16H 25/20

(54) **ACTUATOR FOR A MOTOR VEHICLE**
AKTUATOR FÜR EIN KRAFTFAHRZEUG
ACTIONNEUR POUR UN VÉHICULE À MOTEUR

(30) Priority: 24.01.2019 EP 19153607
(43) Date of publication of application: 29.07.2020
(73) Proprietor: U-Shin Deutschland Zugangssysteme GmbH R&D, 85253 Erdweg (DE)
(72) Inventor: BREITENBERGER, Peter, 85253 ERDWEG (DE)
(74) Representative: Chevalier, Renaud Philippe

(56) References cited:
- EP-A1- 1 624 219
- DE-A1- 10 055 948
- US-A- 5 944 302
- US-A1- 2003 141 641

## Description

### Technical Field

The invention relates to an actuator such as a spindle drive or a counter balance spring system for a motor vehicle and corresponding adjusting device for motor vehicles in general.

It is known in the automotive access mechanisms to use an adjusting device or actuator for automatically opening and closing an opening panel such as a trunk of a motor vehicle.

Typically, the actuator is movably mounted between a closed position in which a guide tube is retracted telescopically inside an over-tube, and the opening panel is closed; and an open position in which the guide tube is extended telescopically out of the over-tube and the opening panel is opened.

### Background Art

An actuator of the type above mentioned is known from application US 2003141641 regarding a compression spring rod for relatively displacing elements attached to end mounts of the rod assembly that comprises a housing having a rod member moveable between extended and retracted positions relative thereto, and a first compression spring in the housing surrounded by a second compression spring for biasing the rod member to one of an extended or retracted position relative to the housing. The two springs are oppositely wound, of different length, of different outside diameter, and of different wire diameter whereby, from a compressed condition, the spring rod exerts an expansion force which increases at a linear rate. Two sets of the springs can be arranged for biasing the rod member to a central position relative to the housing.

As background information related to spring mechanisms, it can also be cited the application US 2007001356 dealing with a spring system for relatively displacing elements attached to end mounts of the rod assembly that comprises a housing having a rod member movable between extended and retracted positions relative thereto, and a first spring in the housing surrounded by a second spring for biasing the rod member to one of an extended or retracted position relative to the housing. The two springs exert a non-linear load versus deflection curve as the rod member moves between an extended position and a retracted position

The double nested spring approach of the prior art documents cited increases complexity of already complex actuator systems while increasing the weight. Furthermore, the prior art leads to the problem that, during an opening and closing process of electrically operated tailgate, there are rattling and banging noises within the actuator.

These noises are produced by the rotation of the spring during the compression or decompression phase. The spring tends to rotate in the direction of the winding, supported by the plain bearings that are positioned at the ends of the spring. Rattling noise appears since the rotation of the spring is, due to static friction and changing forces at the spring ends, not a linear movement, but rather a jerky one.

Practically, the discontinuous, pulse-like movement of the spring or springs, causes s-shaped oscillations of said spring(s) whose amplitudes are such that they partly hit against the outer tube and produce undesirable noises.

The invention aims at reducing the noise produced by the spring oscillations.

### Summary of invention

The invention is defined by an actuator according to claim 1. In a preferred embodiment the actuator may also comprise -connecting means such as a ball socket at each one of its ends so as to link said actuator to a body of a motor vehicle and to an opening panel.

In a further preferred embodiment there is only one helical spring radially located between said guiding pipe and said spring cover tube.

Alternatively, there might be an embodiment with a plurality of helical springs arranged in series and radially located between said guiding pipe and said spring cover tube. Having a plurality of springs makes it easier to produce the spindle according to the invention.

Preferably, the right hand wound section and the left hand wound section have the same length but it is conceivable to have different lengths for said sections. In any cases, the forces of the used spring(s) must be the same. Having different lengths increases the freedom regarding the design, available space, and assembling process.

The actuator according to the invention can either be a compact spindle drive or a counter balance spring system.

According to an embodiment, the actuator according to the invention may comprise an isolating ring located in-between the first right hand wound section and the second left hand wound section.

According to an embodiment, the isolating ring comprises a recess configured to accommodate an end of the first right hand wound section or an end of the second left hand wound section. In particular, the isolating ring may comprise a first lateral side and a second lateral side wherein the first lateral side is configured to face the first right hand wound section and the second lateral side is configured to face the second left hand wound section. The first lateral side may comprise a first recess configured to accommodate an end of the first hand wound section. Alternatively or in addition, the second lateral side may comprise a second recess configured to accommodate the end of the second left hand wound section. According to an embodiment, the first recess may comprise a tunnel-shaped portion configured to cooperate and block the end of the first right hand wound section. Alternatively or in addition, the second recess may comprise a tunnel-shaped portion configured to cooperate and block the end of the second left hand wound section. According to an embodiment, the first right hand wound section and/or respectively the second left hand wound section may comprise a first spring flat section and/or respectively a second spring flat section. In particular, the first spring flat section and/or respectively a second spring flat section is located near the end of the first right hand wound section and/or respectively near the end of the second left hand wound section. In addition, the first lateral side and/or respectively the second lateral side may comprise a first ring flat section and/or respectively a second ring flat section. In particular, the first ring flat section and/or the second ring flat section is configured to abut against the first spring flat section and/or respectively the second spring flat section. In particular, the first ring flat section and/or respectively the second ring flat section is located next to the first recess and/or respectively next to the second recess.

In addition, the first lateral side and/or respectively the second lateral side may comprise a first cradle section and/or respectively a second cradle section. In particular, the first cradle section and/or the second cradle section is configured to accommodate a first spring portion of the first right hand wound section and/or respectively a second spring portion of the second left hand wound section. In particular, the first spring portion and/or respectively the second spring portion is located next to the first spring flat section and/or respectively next to the second spring flat section. In particular, the first cradle section and/or the second cradle section is located next to the first ring flat section and/or respectively the second ring flat section.

Other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not necessarily drawn to scale and that, unless otherwise indicated, they are merely intended to conceptually illustrate the structures and procedures described herein.

### Brief description of drawings

Figure 1 is an exploded view of an actuator according to the invention.
Figure 2 is a view of a helical spring according to the invention.
Figure 3 is a perspective view of an isolating ring according to a preferred embodiment of the invention.
Figure 4 is a partial and perspective view of an end of one wounded section according to the preferred embodiment of the invention.
Figure 5 is a view of the helical spring according to the preferred embodiment of the invention.

### Description of embodiments

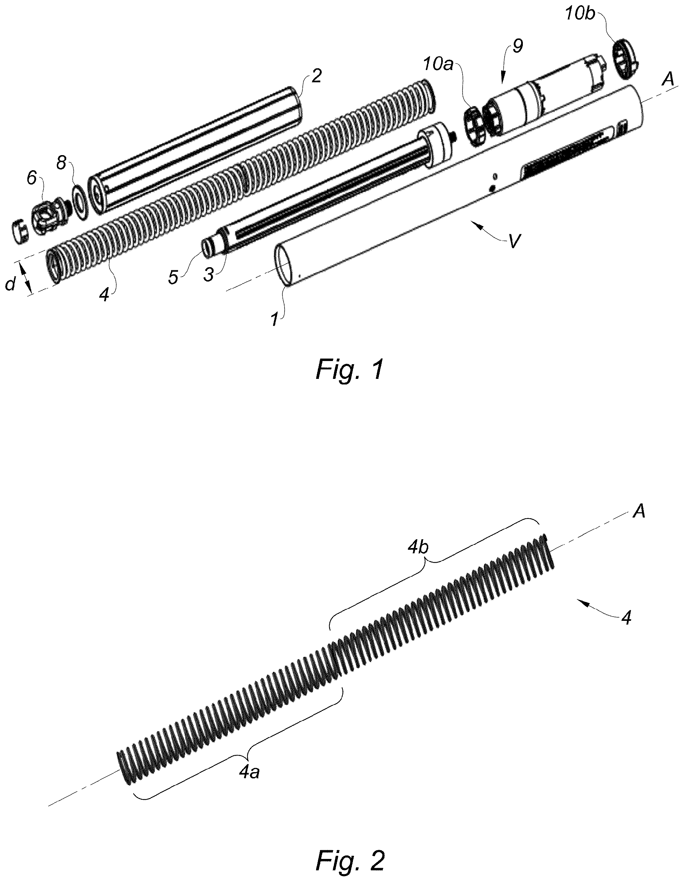

The actuator device illustrated in the figure 1 has a housing tube 1 into which a spring cover tube 2 is mounted in a telescopically displaceable manner.

A ball socket 6 is arranged at the end of the spring cover tube 2 opposite the housing tube 1. The ball sockets are used to connect the actuator device in an articulated manner to a fixed body component of a motor vehicle and to a moveable component of the motor vehicle, which component is designed as an opening panel such as a flap, a door, etc....

A helical coil compression spring 4 comprising a first right hand wound section 4a and a second left hand wound section 4b is arranged in the annular gap between a guiding pipe 3 and the spring cover tube 2. The helical compression spring 4 surrounds the former with a clearance and is supported at its one end by the ball socket 6 and at the other end on a fixed part such as an inward radially extending flange belonging to the housing tube 1 or outwardly extending radial flange belonging to the guiding tube 3.

Inside the guiding pipe 3, there is a threaded pushing rod 5 axially displaceable along axis A and driven by the flexible drive unit 9 comprising a motor for electrically driving the pushing rod 5 and therefore an opening panel from close to opening position and vice versa.

The actuator according the invention may comprise a multi-stage gear inside the drive unit 9 rotatably driven by an electric motor. Precisely, a damper 10a is located between the gear box and the housing tube 1 and a damper 10b is located between the actuator motor and the housing tube 1. In addition, there is a first washer located between the compression spring 4 and the guiding pipe 3 and a second washer located between the spring cover tube 2 and the compression spring 4.

As shown in figure 1 and visible from figure 2, the external diameter d of the helical spring 4 according to the invention is constant but it is not compulsory to have a constant diameter. However, the spring forces have to be equal.

In figure 2, the length of the first right hand wound section 4a and the length of the second left hand wound section 4b are identical but in a another embodiment, such lengths are different. In all cases, the force F4a of the first right hand wound section 4a must be equal to the force F4b of the second left hand wound section 4b.

This figure depicts a helical spring 4 having two sections 4a and 4b. Each section shown being substantially identical the only difference being the winding direction.

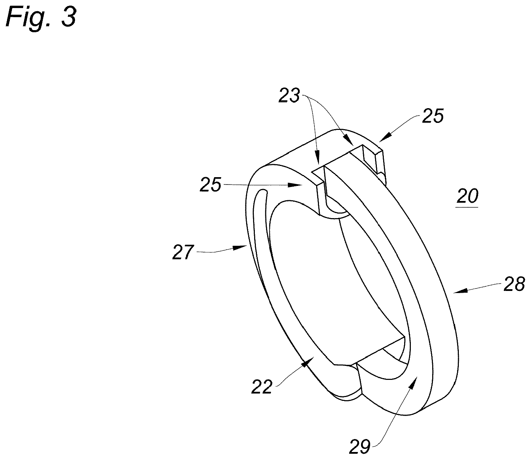

In a preferred embodiment, illustrated in reference to figures 3 to 5, an isolating ring 20 is interposed between the oppositely wounded sections. In reference to figure 3, such isolating ring 20 may comprise first and second recesses 23, 23 and first and second flat portions 29 for receiving, at least partly, each last wound of the oppositely wounded sections. In particular, the isolating ring comprises a first lateral side 25 facing the first right hand wound section 4a and the second lateral side 25 facing the second left hand wound section 4b. The first lateral side 25 comprises the first recess 23 configured to accommodate the end of the first hand wound section 4a. The second lateral side 25 comprises the second recess configured to accommodate the end of the second left hand wound section 4b. The first recess 23 is a tunnel-shaped portion configured to cooperate and block the end of the first right hand wound section 4a. The second recess forms a tunnel-shaped portion configured to cooperate and block the end of the second left hand wound section 4b.

The first right hand wound section 4a and the second left hand 4b wound section comprise a first spring flat section 26 located near the end of the first right hand wound section and respectively a second spring flat section 26 near the end of the second left hand wound section. In addition, the first lateral side 25 and respectively the second lateral side may comprise a first ring flat section 29 located next to the first recess 23 and respectively a second ring flat section 29 located next to the second recess. In particular, the first ring flat section and/or the second ring flat section 29 are configured to abut against the first spring flat section and/or respectively the second spring flat section 26.

In addition, the first lateral side and respectively the second lateral side may comprise a first ring cradle section 22 located next to the first ring flat section 26 and respectively a second cradle section 22 located next to the second ring flat section 26. In particular, the first ring cradle section and/or the second cradle ring cradle section are configured to accommodate a first spring portion the first right hand wound section 4a and/or respectively a second spring portion the second left hand wound section 4b. In particular, the first spring portion and respectively the second spring portion are located next to the first spring flat section and/or respectively next to second spring flat section.

The recesses 23 extends along a first semi-circle 27 of the ring 20 on each lateral side 25 of the ring 20.

Moreover, the first and second recesses 23, 23 extends through the thickness of the ring 20 in order to block the end of each wounded sections inside the ring 20.

The ring 20 comprises a first semi-circle 27 comprising the tunnel sections 23 and the cradle sections 22 and a second semi-circle 28 comprising the flat portions 29.

The thickness of the first semi-circle 27 is higher than the thickness of the second-semi-circle 28.

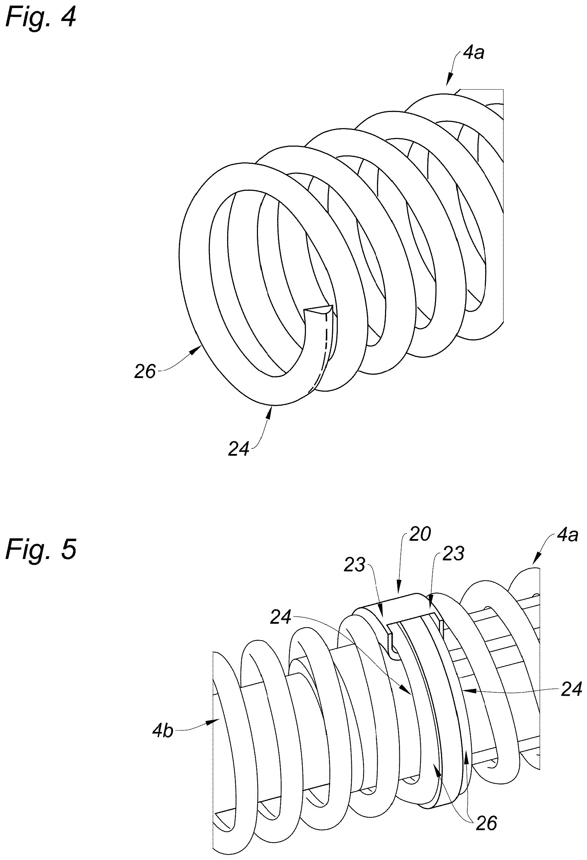

In reference to figure 5, the oppositely wounded springs are assembled by the ring 20.

Indeed, each corresponding end of each wounded section is inserted inside the ring 20.

Each corresponding end comprising the flat portion 26 is firstly inserted inside the tunnel 23, abutting against flat portion 29, and received inside cradle 22.

This isolating ring 20 improves the connection between the oppositely wounded springs in case we have to separate springs oppositely wounded. Furthermore, this isolating ring 20 avoids collision between the oppositely wounded springs 4a,4b and the other parts of the actuator, for instance the threaded pushing rod 5 and the spring cover tube 2 or push rod 5.

Generally speaking: the particular thickness or material of the wire used for the spring according to the invention, the inner and outer diameter of said spring, the number of windings, the length, the winding angle of the spring, and other factors, will be in part dependent on the function and end use of the actuator so as to produce a load/deflection curve that matches the targeted application.

Even though the figures show only one spring, It is also contemplated an embodiment wherein there are multiple helical springs 4, each having oppositely wounded sections, said helical springs being arranged axially one after the other in series.

For the avoidance of any doubt, oppositely wounded sections means sections typically manufactured from spring steel and typically formed by a machinery programmed to form the left hand wound section, then reverse the winding adjacent one end of the left hand wound section to form the right hand wound one, or vice-versa. The angles with reference to a direction perpendicular to the spring 4 axis are equal but opposite.

The coupling element between the different helical springs 4 could be a form-fitted element like a sleeve, bolt, mandrel, and the like as well as a force-fitted or substance bonded element like clamping connections, brazed joint, etc.... A spring, manufactured in one piece of material with different winding sense, is of course possible.

The compression spring according to the invention can be used both with and without coating such as flocking commonly used in actuators such as spindle drive systems for opening doors. The flock is known to reduce the noise in the passenger compartment and helps the sliding of the spring inside its seat.

## Claims

1. Actuator (V) extending along an axis (A), configured to be connected to a body of a motor vehicle and to an opening panel, the actuator (V) comprising co-axially:
- a guiding pipe (3),
- a spring cover tube (2),
- a co-axially mounted housing tube (1) surrounding the spring cover tube (2),
- a helical spring (4) radially located between said guiding pipe (3) and said spring cover tube (2),
the actuator (V) being movably mounted between a closed position in which the helical spring (4) is compressed, and an open position in which the helical spring (4) is at least partially relaxed,
**characterized in that** said helical spring (4) comprises at least a first right hand wound section (4a) and a second left hand wound section (4b), the actuator further comprises a drive unit (9) to drive a push rod (5) longitudinally along the axis (A), whereby the push rod (5) is configurable to push the opening panel between a closed position and an open position, whereby a first damper (10a) is located between the drive unit (9) and the housing tube (1) and a second damper (10b) is located on the side opposite to the first damper (10a) and connected to the drive unit (9).

2. Actuator (V) according to claim 1 wherein the drive unit (9) comprises a motor.

3. Actuator (V) according to anyone of preceding claims comprising connecting means (6) such as a ball socket at each one of its ends so as to link said actuator (V) to a body of a motor vehicle and to an opening panel.

4. Actuator (V) according to anyone of preceding claims wherein there is only one helical spring radially located between said guiding pipe (3) and said spring cover tube (2).

5. Actuator (V) according to anyone of preceding claims 1 to 3 wherein there is a plurality of helical springs (4) arranged in series and radially located between said guiding pipe (3) and said spring cover tube (2).

6. Actuator (V) according to anyone of preceding claims 1 to 4 wherein the right hand wound section (4a) and the left hand wound section (4b) have the same length.

7. Actuator (V) according to anyone of preceding claims 1 to 4 wherein the right hand wound section (4a) and the left hand wound section (4b) have different lengths.

8. Actuator (V) according to anyone of preceding claims wherein the said actuator is a compact spindle drive or a counter balance spring system.

9. Actuator (V) according to anyone of preceding claims wherein an isolating ring (20) is located in-between said at least first right hand wound section (4a) and second left hand wound section (4b).

10. Actuator (V) according to claim 9 when depending on claim 5, wherein the isolating ring (20) comprises a recess (23) configured to accommodate an end of the first right hand wound section (4a) or an end of the second left hand wound section (4b).

## Patentansprüche

1. Aktuator (V), der sich entlang einer Achse (A) erstreckt und ausgestaltet ist, mit einem Körper eines Kraftfahrzeugs und mit einem Öffnungspaneel verbunden zu werden, wobei der Aktuator (V) koaxial umfasst:
- eine Führungsröhre (3),
- ein Federabdeckrohr (2),
- ein koaxial montiertes Gehäuserohr (1), welches das Federabdeckrohr (2) umgibt,
- eine Schraubenfeder (4), die radial zwischen der Führungsröhre (3) und dem Federabdeckrohr (2) angeordnet ist,
wobei der Aktuator (V) beweglich zwischen einer geschlossenen Position, in der die Schraubenfeder (4) komprimiert ist, und einer offenen Position, in der die Schraubenfeder (4) wenigstens teilweise entspannt ist, montiert ist,
**dadurch gekennzeichnet, dass** die Schraubenfeder (4) wenigstens einen ersten rechtsgewickelten Abschnitt (4a) und einen zweiten linksgewickelten Abschnitt (4b) umfasst,
der Aktuator weiter eine Antriebseinheit (9) umfasst, um eine Druckstange (5) längs entlang der Achse (A) anzutreiben,
wobei die Druckstange (5) ausgestaltbar ist, das Öffnungspaneel zwischen einer geschlossenen Position und einer offenen Position zu drücken, wobei ein erster Dämpfer (10a) zwischen der Antriebseinheit (9) und dem Gehäuserohr (1) angeordnet ist und ein zweiter Dämpfer (10b) auf der Seite gegenüber dem ersten Dämpfer (10a) angeordnet und mit der Antriebseinheit (9) verbunden ist.

2. Aktuator (V) nach Anspruch 1, wobei die Antriebseinheit (9) einen Motor umfasst.

3. Aktuator (V) nach einem der vorstehenden Ansprüche, umfassend Verbindungsmittel (6) wie eine Kegelpfanne an jedem seiner Enden, um den Aktuator (V) mit einem Körper eines Kraftfahrzeugs und mit einem Öffnungspaneel zu verbinden.

4. Aktuator (V) nach einem der vorstehenden Ansprüche, wobei nur eine Schraubenfeder radial zwischen der Führungsröhre (3) und dem Federabdeckrohr (2) angeordnet ist.

5. Aktuator (V) nach einem der vorstehenden Ansprüche 1 bis 3, wobei eine Vielzahl von Schraubenfedern (4) in Reihe und radial zwischen der Führungsröhre (3) und dem Federabdeckrohr (2) angeordnet ist.

6. Aktuator (V) nach einem der vorstehenden Ansprüche 1 bis 4, wobei der rechtsgewickelte Abschnitt (4a) und der linksgewickelte Abschnitt (4b) die gleiche Länge aufweisen.

7. Aktuator (V) nach einem der vorstehenden Ansprüche 1 bis 4, wobei der rechtsgewickelte Abschnitt (4a) und der linksgewickelte Abschnitt (4b) unterschiedliche Längen aufweisen.

8. Aktuator (V) nach einem der vorstehenden Ansprüche, wobei der Aktuator ein kompakter Spindelantrieb oder ein Federausgleichsystem ist.

9. Aktuator (V) nach einem der vorstehenden Ansprüche, wobei ein Isolierring (20) zwischen dem wenigstens ersten rechtsgewickelten Abschnitt (4a) und zweiten linksgewickelten Abschnitt (4b) angeordnet ist.

10. Aktuator (V) nach Anspruch 9, wenn abhängig von Anspruch 5, wobei der Isolierring (20) eine Aussparung (23) umfasst, die ausgestaltet ist, ein Ende des ersten rechtsgewickelten Abschnitts (4a) oder ein Ende des zweiten linksgewickelten Abschnitts (4b) aufzunehmen.

## Revendications

1. Actionneur (V) s'étendant selon un axe (A), configuré pour être relié à une carrosserie d'un véhicule automobile et à un ouvrant, l'actionneur (V) comprenant de manière coaxiale :
- un tuyau de guidage (3),
- un tube cache-ressort (2),
- un tube de boîtier (1) monté de manière coaxiale entourant le tube cache-ressort (2),
- un ressort hélicoïdal (4) situé radialement entre ledit tuyau de guidage (3) et ledit tube cache-ressort (2),
l'actionneur (V) étant monté de manière mobile entre une position fermée dans laquelle le ressort hélicoïdal (4) est comprimé, et une position ouverte dans laquelle le ressort hélicoïdal (4) est au moins partiellement détendu,
**caractérisé en ce que** ledit ressort hélicoïdal (4) comprend au moins une première section enroulée à droite (4a) et une deuxième section enroulée à gauche (4b),
l'actionneur comprend en outre une unité d'entraînement (9) pour entraîner une tige de poussée (5) longitudinalement selon l'axe (A),
moyennant quoi la tige de poussée (5) peut être configurée pour pousser l'ouvrant entre une position fermée et une position ouverte, moyennant quoi un premier amortisseur (10a) est situé entre l'unité d'entraînement (9) et le tube de boîtier (1) et un deuxième amortisseur (10b) est situé sur le côté opposé au premier amortisseur (10a) et relié à l'unité d'entraînement (9).

2. Actionneur (V) selon la revendication 1 dans lequel l'unité d'entraînement (9) comprend un moteur.

3. Actionneur (V) selon l'une quelconque des revendications précédentes comprenant un moyen de liaison (6) tel qu'une cage de rotule au niveau de chacune de ses extrémités de manière à relier ledit actionneur (V) à une carrosserie d'un véhicule automobile et à un ouvrant.

4. Actionneur (V) selon l'une quelconque des revendications précédentes dans lequel il n'y a qu'un seul ressort hélicoïdal situé radialement entre ledit tuyau de guidage (3) et ledit tube cache-ressort (2).

5. Actionneur (V) selon l'une quelconque des revendications précédentes 1 à 3 dans lequel il y a une pluralité de ressorts hélicoïdaux (4) agencés en série et situés radialement entre ledit tuyau de guidage (3) et ledit tube cache-ressort (2).

6. Actionneur (V) selon l'une quelconque des revendications précédentes 1 à 4, dans lequel la section enroulée à droite (4a) et la section enroulée à gauche (4b) ont la même longueur.

7. Actionneur (V) selon l'une quelconque des revendications précédentes 1 à 4, dans lequel la section enroulée à droite (4a) et la section enroulée à gauche (4b) ont des longueurs différentes.

8. Actionneur (V) selon l'une quelconque des revendications précédentes dans lequel ledit actionneur est un système d'entraînement de broche compact ou un système de ressort d'équilibrage.

9. Actionneur (V) selon l'une quelconque des revendications précédentes, dans lequel une bague isolante (20) est située entre lesdites au moins première section enroulée à droite (4a) et deuxième section enroulée à gauche (4b).

10. Actionneur (V) selon la revendication 9 lorsqu'elle dépend de la revendication 5, dans lequel la bague isolante (20) comprend un évidement (23) configuré pour recevoir une extrémité de la première section enroulée à droite (4a) ou une extrémité de la deuxième section enroulée à gauche (4b).
